(19) Europäisches Patentamt
European Patent Office
Office européen des brevets

(11) **EP 1 762 767 A2**

(12) **EUROPÄISCHE PATENTANMELDUNG**

(43) Veröffentlichungstag:
**14.03.2007 Patentblatt 2007/11**

(51) Int Cl.:
***F16L 9/12*** *(2006.01)*

(21) Anmeldenummer: 06018187.2

(22) Anmeldetag: **31.08.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **09.09.2005 DE 102005042976**

(71) Anmelder: **LUK LAMELLEN UND KUPPLUNGSBAU BETEILIGUNGS KG 77815 Bühl (DE)**

(72) Erfinder:
• **Rammhofer, Thomas**
  **77880 Sasbach (DE)**
• **Krahtova, Ioana**
  **76133 Karlsruhe (DE)**
• **Hummel, Edgar**
  **77694 Kehl (DE)**
• **Szamos, Boglarka**
  **77815 Bühl (DE)**
• **Frison, Dominique**
  **67160 Seebach (FR)**

(54) **Druckleitung**

(57) Die Erfindung betrifft eine Druckleitung für ein hydraulisches System für eine Kupplungsbetätigung, bestehend aus mindestens einem Teilabschnitt eines Kunststoffrohres (11,12) mit einem Außendurchmesser "D" und einem Innendurchmesser "d", wobei ein Vergleichswert $k = (D^2 + d^2)$ des Kunststoffrohres (11,12) kleiner als 70 mm$^2$ ist, mit der einerseits die Resonanzfrequenz zu kleineren Werten verschoben werden kann, um die Geräuschübertragung in den Fahrgastinnenraum zu reduzieren, und die andererseits eine Steifigkeit aufweist, die eine kraftsparende Verformung, sowie flexible Verlegung im Fahrzeugraum zulässt.

EP 1 762 767 A2

**Beschreibung**

Die Erfindung betrifft eine Druckleitung zur Realisierung einer hydraulischen Übertragungsstrecke insbesondere in einem Kraftfahrzeug gemäß dem Oberbegriff des Anspruchs 1.

In einem Kraftfahrzeug weist das Fluidsystem hydraulische Eigenschwingungen auf, die vom Verbrennungsmotor herrühren, und eine Summe von harmonischen Anregungen verschiedener Ordnung darstellen. Die Amplituden und Phasen dieser Schwingungen sind einerseits abhängig von der Drehzahl des Verbrennungsmotors und andererseits von den hydraulischen Eigenfrequenzen des Fluidsystems. Diese Eigenfrequenzen lassen sich u. a. aus der Länge der Druckleitung und der Schallgeschwindigkeit bestimmen. Wenn Erregerfrequenzen mit solchen hydraulischen Eigenfrequenzen zusammentreffen, gerät das fluidische System in Resonanz. Dabei können die Pulsationsamplituden so stark ansteigen, dass es im schlimmsten Fall zur Beeinträchtigung der hydraulischen Übertragung kommt, zumindest jedoch zu störenden Geräuschabstrahlungen in den Fahrzeuginnenraum.

Die Luftschwingungen, die das menschliche Ohr wahrnimmt, werden dabei nicht nur von den Elementen im hydraulischen System abgestrahlt, in denen sich die Schwingungsquelle befindet, sondern häufig zu einem viel größeren Teil von anderen Elementen, zu denen die Schwingungen über feste Werkstoffbrücken weitergeleitet werden. Eine dieser Brücken stellt die Druckleitung dar. Mit Hilfe der geometrischen Auslegung der Druckleitung ist deren Eigenfrequenz und somit der Übertragungsweg beeinflussbar. Die geometrische Auslegung der Druckleitung ist jedoch auch von dem zur Verfügung stehenden Bauraum im Fahrzeug abhängig. Aus diesem Grunde ist es nur in den seltensten Fällen möglich, eine Druckleitung gerade zu verlegen. Meist sind unterschiedlichste Formen von Krümmungen in der Druckleitung notwendig, um die entsprechenden Bauteile miteinander zu verbinden.

Nach der VDI- Richtlinie 3842 "Schwingungen in Rohleitungssystemen" sind die Eigenfrequenzgleichungen verschiedener Schwingungsarten dargestellt. Die Formel zur Berechnung der Eigenfrequenzen $f_{0j}$ für freie, ungedämpfte Balkenschwingungen lautet:

$$f_{0j} = \frac{1}{2\pi}\left(\frac{\lambda_j}{l}\right)^2 \sqrt{\frac{EI}{\mu}}.$$

$\lambda_j$ - abhängig von den Randbedingungen
Fall: gelenkig- gelenkig => $\lambda_j = j\pi$ wobei j = 1, 2, 3,.....
l - Leitungslänge [m]
E - Elastizitätsmodul [N/m²]
I - Trägheitsmoment [m⁴]
$\mu$ - Massenbelegung pro Längeneinheit [kg/m]

$\mu = \rho A$

$$I_{Rohr} = \pi \frac{D^4 - d^4}{64} = \frac{A}{4}\left(R^2 + r^2\right)$$

$$f_{0j} = \frac{1}{2\pi}\left(\frac{\lambda_j}{l}\right)^2 \sqrt{\frac{EA(R^2 + r^2)}{4\rho A}}$$

$$f_{0j} = \frac{1}{8\pi}\left(\frac{\lambda_j}{l}\right)^2 \sqrt{\frac{E(D^2 + d^2)}{\rho}}$$

Derzeit ist es allgemein üblich für in Kraftfahrzeuge eingesetzte Druckleitungen Rohre aus Kunststoff, wie PA 12, zu verwenden, die einen Innendurchmesser von 4 bis 4,5 mm und Wandstärken von 2 bis 2,5 mm aufweisen. Wie bereits erwähnt, ist aus diesen Werten die Eigenfrequenz der Druckleitung ableitbar, die sich aus der Wandstärke, also der Differenz von deren Außendurchmesser zu deren Innendurchmesser ergibt, der Länge und der Dichte des verwendeten Werkstoffes. Bei Leitungen, die gleiche (konstante) Länge, gleichen Werkstoff und gleiche Randbedingungen haben, bleiben als auf die Eigenfrequenz einer Druckleitung Einfluss ausübende Faktoren, nur noch die Größe für deren Außen- und Innendurchmesser übrig.

Sollen, gleiche Längen vorausgesetzt, die derzeit am Markt eingesetzten Druckleitungen hinsichtlich ihrer Außen- und Innendurchmesser miteinander verglichen werden, ist es sinnvoll, zuvor einen Vergleichsfaktor k = (D² + d²) einzuführen, der gleichzeitig auch ein Indiz für die Steifigkeit der aus gleichem Werkstoff hergestellten Druckleitungen darstellt.

| D (mm) | s (mm) | d (mm) | k (mm²) |
|--------|--------|--------|---------|
| 9 | 2,5 | 4 | 87,25 |
| 8 | 2 | 4 | 80 |
| 8 | 2,25 | 3,5 | 76,25 |

Aus der aufgeführten Tabelle ist ersichtlich, dass der Wert des Faktors k um die 80 mm² schwankt. Das bedeutet, dass diese so dimensionierten aus gleichem Werkstoff bestehenden Druckleitungen eine hohe Steifigkeit aufweisen. Diese hohe Steifigkeit ist jedoch bei der Herstellung von Krümmungen in Druckleitungen selbst hinderlich. Die bereits vorgeformten Druckleitungen lassen darüber hinaus keine flexible Verlegung im Fahrzeuginnenraum zu. Die Krümmungen vor der Verlegung im Fahrzeug werden zurzeit so in die Leitung eingebracht, indem die Leitung auf eine bestimmte Temperatur vorgewärmt und in eine der künftigen Form entsprechende Biegeeinrichtung eingelegt wird. Dieses Einlegen der Leitung in die Form erfordert einen erheblichen Kraftaufwand. Dabei ist zu beachten, dass der Biegeradius an den jeweiligen Außendurchmesser der Leitung gekoppelt ist, wodurch bei entsprechend großem Außendurchmesser auch der Biegeradius groß sein muss.

Weiterhin weisen die Druckleitungen endseitig Konnektoren auf, um mit anderen Bauteilen verbunden werden zu können. Dazu werden entweder die Leitungsendungen mit Gewinde versehen, wobei der aus Stahl bestehende Konnektor ebenfalls mit Gewinde versehen ist, um auf die Leitungsenden aufgeschraubt werden zu können. Eine andere Möglichkeit besteht darin, die Konnektoren mit den Leitungsenden zu verkrimpen oder mit diesen zu verlöten. Diese Techniken sind jedoch sehr aufwändig und benötigen einen erheblichen Zeitaufwand.

Deshalb ist es Aufgabe der Erfindung, eine Druckleitung herzustellen, mit der einerseits die Eigenfrequenz zu kleineren Werten verschoben wird, um die Geräuschübertragung in den Fahrgastinnenraum zu reduzieren, und die andererseits eine Steifigkeit aufweist, die eine Formbarkeit ohne zusätzliche Hilfsmittel erlaubt und eine flexible Verlegung im Fahrzeug zulässt.

Weiterhin ist es Aufgabe der Erfindung, die Kosten für die Herstellung und Montage der Konnektoren an den Druckleitungsenden zu reduzieren.

Diese Aufgabe wird mit den Merkmalen des Anspruchs 1 gelöst, indem ein Vergleichswert "k" des Kunststoffrohres, der definiert ist als $k = (D^2 + d^2)$, kleiner als $70 \text{ mm}^2$ ist.

Mit Hilfe einer solchen konstruktiven Auslegung des Rohres wird eine hohe Flexibilität erzielt, die eine Verlegung in sehr engen Bauräumen möglich macht. Somit können glatte, unvorgebogene Rohre, das heißt unkonfektionierte Ware "von der Stange" zur beliebigen Verlegung zum Einsatz kommen. Bei der Wahl einer geringen Wandstärke ist es möglich, ohne Vornahme eines vorgeschalteten Vorwärmprozesses, kleine Biegeradien innerhalb seiner zu realisieren.

Eine besonders vorteilhafte Ausgestaltung der Erfindung sieht vor, dass die Druckleitung bzw. ein Teilabschnitt davon PA12 oder PA612 aufweist. Aufgrund der konstruktiven Gestaltung der Leitung, in dem vorzugsweise für den Innendurchmesser d = 3 mm und für den Außendurchmesser D = 5 mm gewählt werden, wird eine dünne Leitung erzielt, die aus kostengünstigem Werkstoff herstellbar ist und kleine Biegeradien zulässt Weiterhin bieten diese aus den genannten Kunststoffen hergestellten Leitungen mit dieser geringen Wandstärke, die zusätzlich noch entsprechend modifiziert wurden, die Möglichkeit, weniger Volumen aufzunehmen und höheren Betriebsdrücken sowie Betriebstemperaturen standzuhalten. Außerdem bietet diese dünne Leitung Vorteile hinsichtlich des Berstdruckes und der Steifigkeit gegenüber dem Stand der Technik.

Da der Außendurchmesser dieser Druckleitung in vorteilhafter Weise denen von Standardrohrleitungen, können die im Fahrzeug für die Befestigung der übrigen Leitungen vorgesehenen Befestigungselemente auch für die Befestigung der Druckleitung mit genutzt werden, wodurch wiederum Kosten eingespart werden können.

In weiterer vorteilhafter Ausgestaltung der Erfindung ist es sinnvoll, diese erfindungsgemäße Druckleitung sowohl zur Verbindung von Betätigungselementen für Kupplungen als auch zur Verbindung der Betätigungselemente für Bremsen einzusetzen. Somit sind für beide hydraulischen Systeme die gleichen Leitungen einsetzbar, wodurch eine erhebliche Kosteneinsparung möglich ist.

Weiterhin wird die Aufgabe der Erfindung mit den Merkmalen des Anspruchs 6 gelöst. Somit bestehen die Konnektoren aus zwei miteinander verbindbaren Zylinderschalen.

In vorteilhafter Ausgestaltung der Erfindung sind die Zylinderschalen jeweils mit Rastelementen versehen, wobei an jeder Zylinderschale beidseitig zur Zylinderachse die Rastelemente invers oder jeweils gleich ausgeführt werden.

Vorteilhaft ist weiterhin, dass am Umfang mindestens einer Zylinderschale ein Schnappelement vorgesehen ist, das elastisch aufweitbar ist.

Je nach Größe des Konnektors können am Umfang beider Zylinderschalen jeweils mindestens ein Schnappelement vorgesehen sein.

In vorteilhafter Ausgestaltung der Erfindung ist der Konnektor aus einem Kunststoffmaterial hergestellt.

In vorteilhafter Ausgestaltung sind die Zylinderschalen zur Korrespondenz mit einem an einem Leitungsende vorgesehenen Anschlag jeweils mit einer der Form dieses Anschlags entsprechenden Nut versehen.

Die Erfindung soll nachfolgend anhand eines Ausführungsbeispiels näher erläutert werden.

Es zeigen:

Figur 1    einen schematischen Überblick eines hydraulische Systems zur Betätigung einer Reibungskupplung

Figur 2    die Verbindung zwischen Druckbegrenzungsventil und Nehmerzylinder mittels erfindungsgemäßer Druckleitung

Figur 3    einen Querschnitt der Druckleitung

Figur 4    eine räumliche Darstellung des mit einem Konnektor zu versehenden Endbereiches einer Druckleitung

Figur 5    eine Schnittdarstellung der Bauteile, gemäß Figur 4,

Figur 6    eine mit einem Anschlussbauteil mittels Konnektor verbundene Druckleitung.

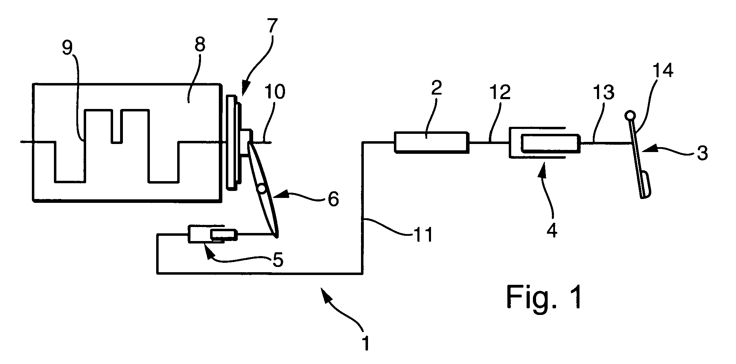

Fig. 1 zeigt in schematischer Darstellung eine mögliche Ausgestaltung eines hydraulischen Systems 1 anhand einer Kupplungsausrückvorrichtung 3 mit einem Geberzylinder 4 und einem Nehmerzylinder 5. In die Nehmerzylinder 5 und Geberzylinder 4 verbindenden Druckleitungen 11, 12 ist optional ein Druckbegrenzungsventil 2 eingebaut.

Die Kupplungsausrückvorrichtung 3 betätigt die Kupplung 7 hydraulisch durch Beaufschlagung des Geberzylinders 4 mittels eines Betätigungsgliedes 14, das ein Fußpedal, ein Aktor, beispielsweise ein elektrischer Aktor, oder dergleichen sein kann.

Mittels einer mechanischen Übertragung 13 wird Druck im Geberzylinder 4 aufgebaut, der über den Leitungsstrang 12, über das Druckbegrenzungsventil 2 und den Leistungsstrang 11 einen Druck im Nehmerzylinder 5 aufbaut. Der Nehmerzylinder 5 kann, wie im gezeigten Beispiel, parallel zur Getriebeeingangswelle 10 angeordnet sein und über eine Ausrückmechanik 6 auf die Tellerfeder der Kupplung 7 zu deren axialer Verlagerung einwirken. Zum Aufbringen der Ausrückkraft ist der Nehmerzylinder 5 jeweils gehäusefest am Getriebegehäuse, das hier nicht näher dargestellt ist, oder an einem anderen gehäusefesten Bauteil angebracht. Die Getriebeeingangswelle 10 überträgt bei geschlossener Kupplung 7 das Drehmoment der Brennkraftmaschine 8 über die Kurbelwelle 9 auf ein nicht näher dargestelltes Getriebe und anschließend auf die Antriebsräder eines Kraftfahrzeuges.

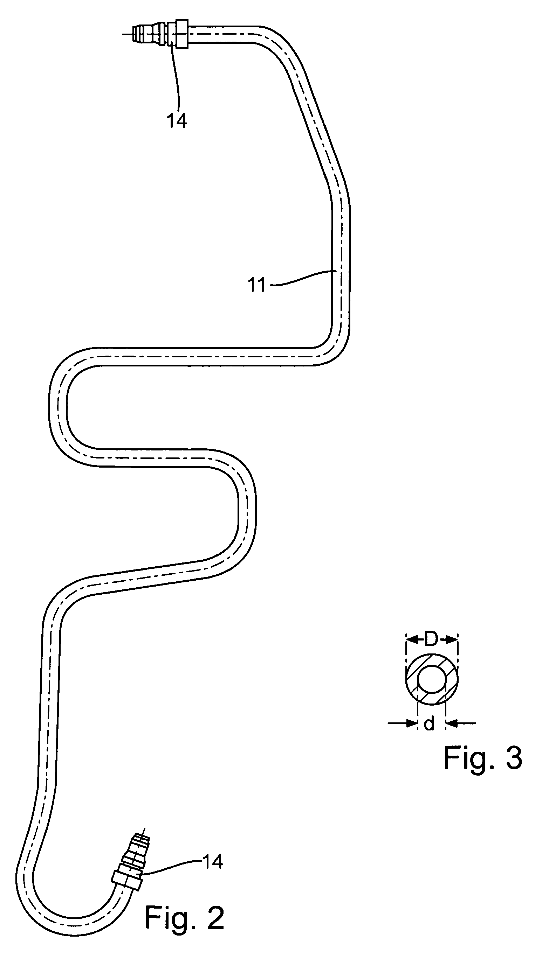

Beispielhaft für eine erfindungsgemäße Druckleitung ist in der Figur 2 die Druckleitung 11, die die beiden Bauteile Nehmerzylinder 5 und Druckbegrenzungsventil 2 miteinander verbindet und in Figur 3 deren Querschnitt dargestellt.

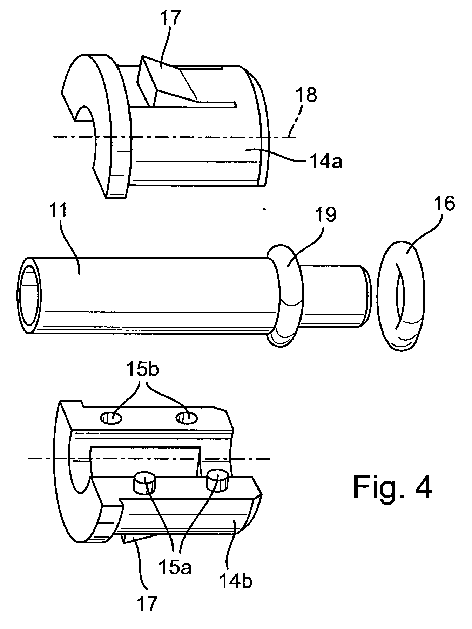

Aus der Figur 4 sind durch die perspektivische Darstellung des Konnektors 14 mit seinen beiden Halbschalen 14a und 14b, die durch die Rastelemente 15a und 15b definierten Verbindungsstellen deutlich aufgezeigt. Weiterhin ist die Leitung 11 erkennbar, die im Endbereich angestaucht wurde, um somit einen Anschlag 19 zu bilden. Dieser Anschlag 19 dient mit seiner rechten Stirnseite als Begrenzung des als O-Ring ausgebildeten Dichtringes 16 und mit seiner linken Stirnseite als Begrenzung für die beiden Zylinderschalen 14a und 14b auf der Druckleitung 11. Weiterhin sind an beiden Zylinderschalen 14a und 14b die aufweitbaren Schnappelemente 17 erkennbar. Diese Schnappelemente 17 haben in dieser Darstellung eine flächige Ausbildung. Ebenso gut könnten sie als Haken ausgebildet sein.

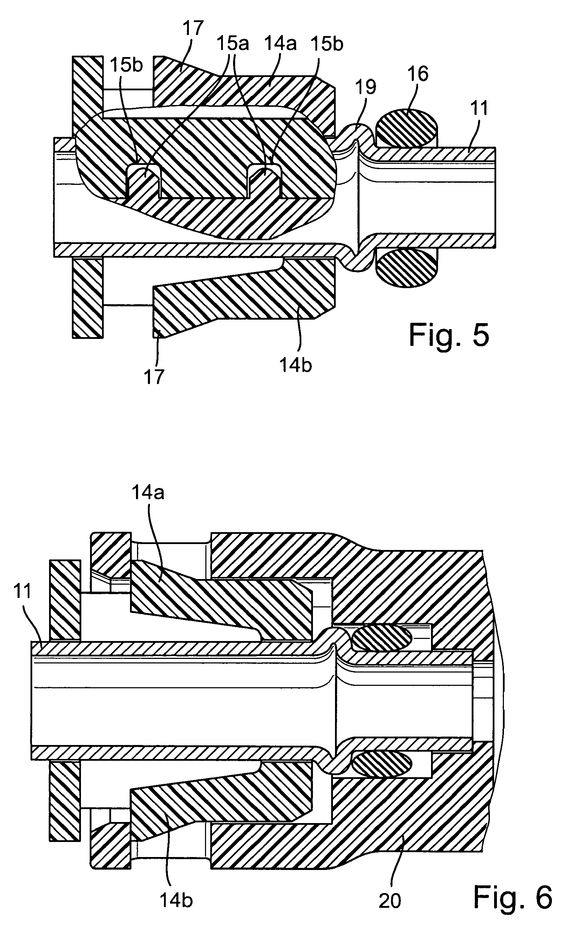

In der Figur 5 sind nochmals die in der Figur 4 dargestellten zu verbindenden Bauteile in einer Schnittdarstellung aufgezeigt. Aus dieser Figur ist die Verbindung der beiden Zylinderschalen 14a und 14b deutlich sichtbar.

In einer weiteren Darstellung, der Figur 6, ist der mit der Druckleitung 11 verbundene Konnektor 14 in ein Anschlussbauteil 20 eingesteckt. Aus dieser Darstellung ist die Funktion der Schnappelemente 17 im Anschlussbauteil 20 erkennbar. Diese rasten beim Zusammenfügen des Endes der Druckleitung 11 mit den Anschlussbauteil 20 in eine in diesem vorgesehene Aussparung ein. Somit wird eine kraftschlüssige Verbindung zwischen dem Ende der Druckleitung 11 und dem Anschlussbauteil 20 hergestellt, die jedoch im Bedarfsfall reversibel ist.

## Bezuaszeichenliste

| | |
|---|---|
| 1 | Hydraulisches System |
| 2 | Druckbegrenzungsventil |
| 3 | Kupplungsausrückvorrichtung |
| 4 | Geberzylinder |
| 5 | Nehmerzylinder |
| 6 | Ausrückmechanik |
| 7 | Kupplung |
| 8 | Brennkraftmaschine |
| 9 | Kurbelwelle |
| 10 | Getriebeeingangswelle |
| 11 | Teilabschnitt eines Kunststoffrohres / Druckleitung |
| 12 | Teilabschnitt eines Kunststoffrohres / Druckleitung |
| 13 | mechanische Übertragung |
| 14 | Leitungsanschluss / Konnektor |
| D | Außendurchmesser der Druckleitung |
| d | Innendurchmesser der Druckleitung |
| 14a | Zylinderschale |
| 14b | Zylinderschale |
| 15a | Rastelement |
| 15b | Rastelement |
| 16 | Dichtring / O-Ring |
| 17 | Schnappelement |
| 18 | Zylinderachse |
| 19 | Anschlag |
| 20 | Aufnahme- / Anschlussbauteil |

## Patentansprüche

1. Druckleitung für ein hydraulisches System mit endseitig angebrachten Konnektoren, bestehend aus mindestens einem Teilabschnitt eines Kunststoffrohres (11, 12) mit einem Außendurchmesser "D" und einem Innendurchmesser "d", **dadurch gekennzeichnet, dass** ein Vergleichswert "k" des Kunststoffrohres (11, 12), definiert als $k = (D^2 + d^2)$, kleiner als 70 mm$^2$ ist.

2. Druckleitung nach Anspruch 1, **dadurch gekennzeichnet, dass** der Teilabschnitt des Kunststoffrohres (11, 12) PA12 oder PA612 aufweist.

3. Druckleitung nach Anspruch 1 und 2, **dadurch gekennzeichnet, dass** der Teilabschnitt des Kunststoffrohres (11, 12) so modifiziert ist, dass eine erhöhte Flexibilität gegenüber dem unmodifizierten PA12 oder PA612 besteht.

4. Druckleitung nach Anspruch 1, **dadurch gekennzeichnet, dass** der Außendurchmesser (D) des Teilabschnittes des Kunststoffrohres (11, 12) dem von Standardrohrleitungen entspricht.

5. Druckleitung nach Anspruch 1, **dadurch gekennzeichnet, dass** das der Teilabschnitt des Kunststoffrohres (11, 12) sowohl zur Verbindung von Betätigungselementen für Kupplungen als auch zur Verbindung für die Betätigungselemente für Bremsen einsetzbar ist.

6. Konnektor für eine Druckleitung für ein hydraulisches System, **dadurch gekennzeichnet, dass** dieser zwei miteinander verbindbare Zylinderschalen (14a, 14b) aufweist.

7. Konnektor nach Anspruch 6, **dadurch gekennzeichnet, dass** die Zylinderschalen (14a, 14b) mit Rastelementen (15a, 15b) versehen sind.

8. Konnektor nach den Ansprüchen 6 und 7, **dadurch gekennzeichnet, dass** die Rastelemente (15a, 15b) an jeder Zylinderschale (14a, 14b) beidseitig zur Zylinderachse (18) jeweils invers ausgeführt sind.

9. Konnektor nach den Ansprüchen 7 und 8, **dadurch gekennzeichnet, dass** die Rastelemente (15a, 15b) an jeder Zylinderschale (14a, 14b) beidseitig zur Zylinderachse (18) jeweils gleich ausgeführt sind.

10. Konnektor nach Anspruch 6, **dadurch gekennzeichnet, dass** am Umfang mindestens einer Zylinderschale (14a, 14b) mindestens ein Schnappelement (17) vorgesehen ist.

11. Konnektor nach Anspruch 10, **dadurch gekennzeichnet, dass** das Schnappelement (17) elastisch aufweitbar ist.

12. Konnektor nach Anspruch 6, **dadurch gekennzeichnet, dass** dieser aus einem Kunststoffmaterial gefertigt ist.

13. Konnektor nach Anspruch 6, **dadurch gekennzeichnet, dass** die Druckleitung (11) im Endbereich mit einem Anschlag (19) versehen ist.

14. Druckleitung für ein hydraulisches System, bestehend aus einem Kunststoffrohr (11 oder 12), **da-** durch gekennzeichnet, dass** dieses einteilig aus glattem Material besteht und unvorgebogen verlegbar ist.

15. Verfahren zum Verlegen einer Druckleitung im Fahrzeug **gekennzeichnet durch** folgende Schritte:

    - Einbringen eines unvorgebogenen Kunststoffrohres (11 oder 12) in den im Fahrzeug vorgegebenen Bauraum
    - Anbindung der Enden des Kunststoffrohres (11 oder 12) an die vorgesehenen Anschlüsse
    - Verlegen mit gleichzeitiger Modulation der Länge des Kunststoffrohres (11 oder 12)

16. Druckleitung für eine hydraulisches System, bestehend aus einem Kunststoffrohr (11 oder 12), **dadurch gekennzeichnet, dass** dieses in einem Fahrzeug verlegbar ist.

Fig. 1

14

11

14

Fig. 2

D

d

Fig. 3

Fig. 4

Fig. 5

Fig. 6